# EUROPÄISCHE PATENTANMELDUNG

(11) **EP 0 693 252 A1**
(43) Veröffentlichungstag der Anmeldung: **24.01.1996**
(21) Anmeldenummer: 95111335.6
(22) Anmeldetag: 19.07.1995
(51) Int. Cl.: A01D 41/12

(54) **Mähdrescher mit Gebläseregelung**

(30) Priorität: 19.07.1994 DE 4425453
(71) Anmelder: Klöckner-Humboldt-Deutz Aktiengesellschaft, D-51149 Köln (DE)
(72) Erfinder: Priesching, Klaus, Dipl.-Ing., D-89520 Heidenheim (DE)

(57) **Zusammenfassung**

1. Verfahren und Vorrichtung zum Betreiben eines Mähdreschers mit Gebläseregelung.

2.1 Ausgehend von einem Mähdrescher mit einer Schneid- und Zufuhranordnung für das Erntegut, mit einer Dreschanordnung mit Kornabscheidevorrichtung, mit einer insbesondere in Längsrichtung des Mähdreschers liegenden Siebanordnung und mit einer Gebläseanordnung, die in Fahrtrichtung des Mähdreschers gesehen vor bzw. unter der Siebanordnung vorgesehen ist, wobei ein Parameter der Gebläseanordnung veränderbar ist, wird die Aufgabe, ein Verfahren und eine Vorrichtung zum Betreiben eines Mähdreschers bereitzustellen, mit dem die Körnerreinigung optimiert und der Durchsatz verbessert wird sowie die Einstellung des Mähdreschers insbesondere unabhängig von der zu erntenden Fruchtart vereinfacht wird, dadurch gelöst, daß der Parameter des Gebläses, insbesondere die Drehzahl, in Abhängigkeit von einer von dem Gebläse erzeugten Größe (wie z. B. Windgeschwindigkeit oder Druck) verändert wird.

## Beschreibung

Die Erfindung betrifft einen Mähdrescher gemäß dem jeweiligen Oberbegriff der unabhängigen Patentansprüche.

Ein solcher Mähdrescher mit einer Schneid- und Zufuhranordnung für das Erntegut, mit einer Dreschanordnung mit Kornabscheidevorrichtung, mit einer insbesondere in Längsrichtung des Mähdreschers liegenden Siebanordnung und mit einer Gebläseanordnung, die in Fahrtrichtung des Mähdreschers gesehen vor bzw. unter der Siebanordnung vorgesehen ist, wobei ein Parameter der Gebläseanordnung veränderbar ist, ist aus der EP 0 385 107 A1 bekannt. Dabei ist eine Steuervorrichtung vorgesehen, die in Abhängigkeit der Körnerverluste (Verlustanzeige am Siebkasten) oder der Neigung (mittels Inklinometer) des Mähdreschers den Parameter der Gebläseanordnung, insbesondere die Gebläsedrehzahl, steuert. Dies hat sich zwar in der Praxis bewährt, jedoch ist die Steuerung in Abhängigkeit der Körnerverlust träge und ungenau, die Steuerung in Abhängigkeit der Neigung nicht für jeden Einsatzfall (beispielsweise auf durchgehend ebener Fläche) brauchbar.

Darüber hinaus sind Einrichtungen (Windleitprofile) bekannt, die den vom Gebläse erzeugten Wind weitestgehend gleichmäßig über die Fläche der Siebanordnung aufteilen bzw. verteilen sollen. Bei einer solchen Einrichtung wird die Drehzahl des Gebläses konstant gehalten. Diese Einrichtungen sind jedoch konstruktiv aufwendig und arbeiten nicht unbedingt zufriedenstellend.

Der Erfindung liegt daher die Aufgabe zugrunde, ein Verfahren und eine Vorrichtung zum Betreiben eines Mähdreschers bereitzustellen, mit dem die Körnerreinigung optimiert und der Durchsatz verbessert wird sowie die Einstellung des Mähdreschers insbesondere unabhängig von der zu erntenden Fruchtart vereinfacht wird.

Diese Aufgabe ist durch die Merkmale in dem jeweiligen kennzeichnenden Teil der unabhängigen Patentansprüche gelöst und durch die Merkmale der Unteransprüche weitergebildet. Die Beschreibung -des erfindungsgemäßen Verfahrens, eines erfindungsgemäß ausgestatteten Mähdreschers sowie weitere erfindungsgemäße Ausgestaltungen sind im folgenden angegeben und anhand der Zeichnungen erläutert.

Es zeigen:
- Fig. 1, 5:: schematisch einen Längsschnitt durch einen Teil eines erfindungsgemäß ausgestatteten Mähdreschers,
- Fig. 2:: eine Kennlinie des Gebläses, das nach dem erfindungsgemäßen Verfahren arbeitet,
- Fig. 3:: eine Kennlinie des Gebläses, das nach dem Stand der Technik arbeitet,
- Fig. 4:: eine Steuereinrichtung zur Durchführung des erfindungsgemäßen Verfahrens.

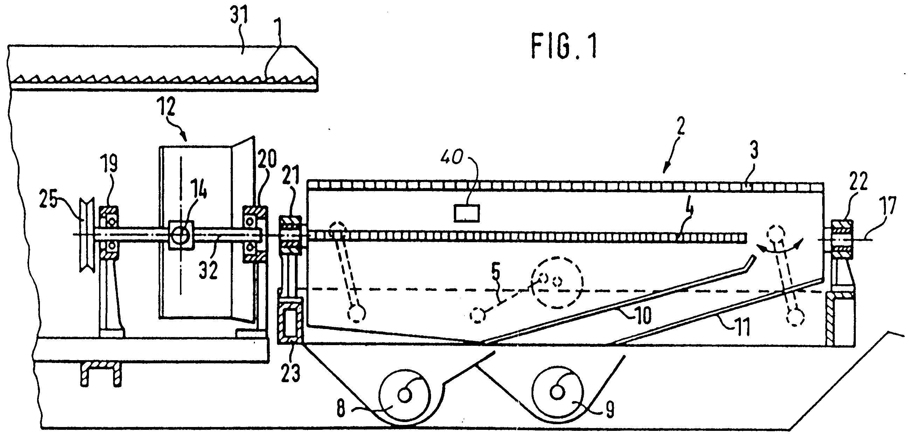

In Figur 1 ist schematisch ein Längsschnitt durch einen Teil eines Mähdreschers dargestellt, wobei der Mähdrescher eine nicht dargestellte Schneideinrichtung aufweist, von der das Erntegut über eine ebenfalls nicht dargestellte Zufuhranordnung einer Dreschanordnung mit Kornabscheidevorrichtung zugeführt wird. Nach dem Ausdreschen des Erntegutes gelangen die Körner zusammen mit der Spreu und dem Kurzstrohanteil auf einen Vorbereitungsboden 1, von dem sie einer Siebanordnung 2 zugeführt werden, wobei der Vorbereitungsboden 1 mit einer Anzahl von parallel zueinander angeordneten, sich in Längsrichtung erstreckenden Leitblechen 31 versehen sein kann. Vom Ende des Vorbereitungsbodens 1 fällt das Körner-Spreu- und Kurzstrohgemisch auf die Siebanordnung 2, die im gewählten Beispiel aus einem Obersieb 3 und einem Untersieb 4 besteht. Das Obersieb 3 und das Untersieb 4 können in einem Rahmen 23 über zwei Lagerstellen 21, 22 derart gelagert sein, daß die Siebanordnung 2 um eine in Längsrichtung des Mähdreschers gelegene Achse 17 pendelnde Bewegungen ausführen kann. Der Rahmen 23 mit der Siebanordnung 2 wird durch einen Exzenterantrieb 5 in schwingende Bewegungen versetzt, so daß durch die dabei erfolgende Schüttelbewegung der Siebanordnung 2 die Körner durch die Maschen vom Obersieb 3 und Untersieb 4 auf ein Führungsblech 10 gelangen, von wo aus sie in den Körnerelevator 8 abgegeben werden. Die Spreu- und die Kurzstrohanteile werden unter der Wirkung der oszillierenden Bewegung und unter der Einwirkung eines Gebläses 12 über die Siebe nach hinten ausgetragen. Vom Körnerelevator 8 aus gelangen die Körner zu einem nicht dargestellten Korntank. Nicht ausgedroschene Ähren, die sogenannte Überkehr, fällt vom Ende der Siebanordnung 2 auf ein weiteres Führungsblech 11 und von da in das mit 9 bezeichnete Überkehrsystem, das mit Wurfelevatoren versehen sein kann, um so diese Ähren erneut auf den Vorbereitungsboden 1 zu befördern. Unterhalb des Vorbereitungsbodens 1 und vor der Siebanordnung 2 ist das Gebläse 12 vorgesehen, das als Querstromgebläse ausgestaltet ist, wobei auch die Ausgestaltung als Trommelgebläse oder andersartiges Gebläse denkbar ist. Die Längsachse 14 des Gebläses 12 erstreckt sich dabei quer zur Fahrtrichtung des Mähdreschers, und zwar im wesentlichen über die gesamte Breite der Siebanordnung 2. Das Gebläse 12 kann dabei um eine in der Längsrichtung des Mähdreschers angeordnete Längsachse 32 pendelnde Bewegungen ausführen, um so der Neigungsverstellung der Siebanordnung zu folgen. Zu diesem Zweck ist das Gebläse 12 an einer in der Längsachse 32 liegenden Welle befestigt, die in zwei Lagern 19, 20 drehbar gehalten ist. Der Antrieb des Gebläses 12 kann dabei in herkömmlicher Art und Weise über einen Keilriementrieb 25 erfolgen, der mit einem Elektromotor, einem Hydraulikmotor, einem Keilriemenvariator oder dem Kraftanschluß des Mähdreschers verbunden ist.

Erfindungsgemäß ist es nun vorgesehen, daß in einem Bereich, der von einem von dem Gebläse 12 erzeugten Größe (Förderdruck, der durch den Wind erzeugt wird) beaufschlagt ist, zumindest ein Sensor 40 angeordnet ist, wobei der Sensor 40 mit einer Steuereinrichtung verbunden ist, die in Abhängigkeit eines Signales des Sensors 40 den Parameter (insbesondere die Drehzahl) des Gebläses 12 verändert. Die Veränderung des Parameters des Gebläses erfolgt beispielsweise in Form einer Drehzahlveränderung, in dem der Keilriementrieb 25 entsprechend angesteuert wird. Dazu ist es denkbar, den Keilriemenvariator heranzuziehen.

Darüber hinaus ist es erfindungsgemäß vorgesehen, daß der Sensor 40 in einem Bereich hinter einem Luftaustritt des Gebläses 12 angeordnet ist, daß der Sensor 40 im Bereich der Siebanordnung 2, insbesondere zwischen dem Obersieb 3 und dem Untersieb 4 angeordnet ist, oder daß der Sensor 40 in der Siebanordnung 2, beispielsweise in Form eines plattenförmigen Sensors, integriert ist. Darüber hinaus sind weitere Bereiche zur Anordnung des Sensors 40, von dem auch mehr als einer vorhanden sein kann, in Bereichen, die von dem Luftdruck des Gebläses 12 beaufschlagt werden, denkbar.

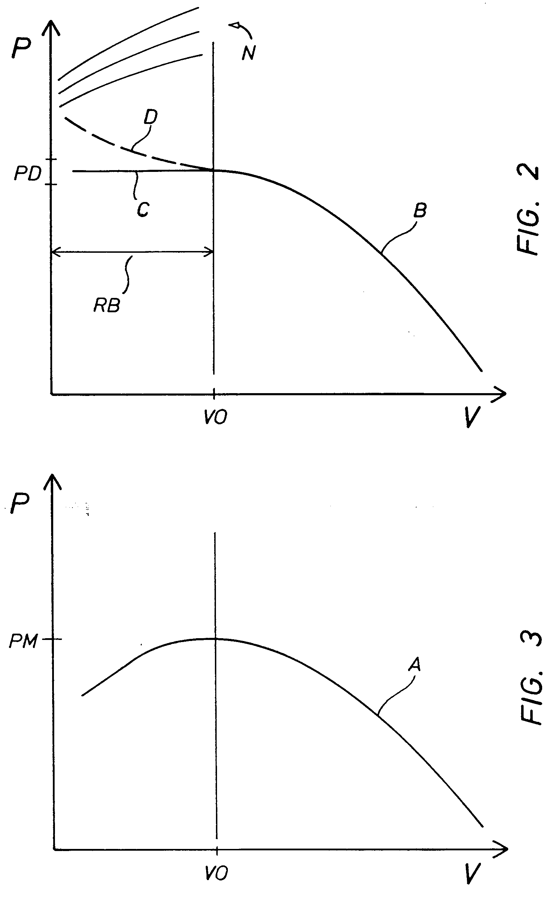

Figur 2 zeigt eine Kennlinie des Gebläses, das nach dem noch zu beschreibenden erfindungsgemäßen Verfahren arbeitet. Dem erfindungsgemäßen Verfahren liegt eine Kennlinie eines Gebläses zugrunde, das nach dem Stand der Technik arbeitet und in Figur 3, die hier zunächst erläutert wird, beschrieben ist. In der Kennlinie gemäß Figur 3 ist über der Fördermenge V der Förderdruck P dargestellt, wobei unter der Fördermenge insbesondere die Menge der Körner verstanden wird, die von der Dreschanordnung mit Kornabscheidevorrichtung in den Bereich der Siebanordnung gefördert wird. Unter dem Förderdruck P ist ein solcher Druck zu verstehen, der von dem Gebläse 12 erzeugt wird. Bei konstanter Drehzahl des Gebläses 12 weist dieses eine Kennlinie A auf, wobei bei einem maximalen Förderdruck PM eine optimale Fördermenge VO gefördert wird. Weiterhin ist in Figur 3 gezeigt, daß die Kennlinie bei abnehmender Fördermenge V zunächst einen Anstieg des Förderdruckes P (rechter Kennlinienbereich neben der optimalen Fördermenge VO) zeigt, während bei weiterer Verringerung der Fördermenge V (z. B. durch zunehmende Versperrung der Siebanordnung bei steigender Leistung der Dreschanordnung und einer Belastung der Siebanordnung) der Förderdruck P wieder abfällt (linker Kennlinienbereich neben der optimalen Fördermenge VO). Eine solche Arbeitsweise ist daher von Nachteil, da das Gebläse vom optimalen Arbeitspunkt abweicht. Es ist daher erfindungsgemäß vorgeschlagen, daß der Parameter des Gebläses 12, insbesondere die Drehzahl, in Abhängigkeit von einer von dem Gebläse 12 erzeugten Größe, bei der es sich um die Windgeschwindigkeit oder einem von dem Gebläse 12 erzeugten Druck handelt, verändert wird. Wird als Gebläse ein Trommelgebläse verwendet, ist es beispielsweise denkbar, daß der Parameter des Gebläses die Flügelstellung ist und diese verändert wird. Die Anwendung des erfindungsgemäßen Verfahrens ist nicht auf die beschriebenen Parameter und Gebläsearten beschränkt.

D. h., daß allgemein vorgesehen ist, daß der Parameter des Gebläses, der den Luftdruck unter der Siebanordnung erzeugt, verändert wird. So kann dann beispielsweise die Kennlinie des Gebläses 12 gemäß Figur 2 in dem linken Kennlinienbereich (links neben der optimalen Fördermenge VO) verändert werden, während der rechte Kennlinienbereich (in Figur 2 mit der Bezugsziffer B versehen) unverändert bleibt, da dieser Bereich B beispielsweise in einem Bereich liegen kann, in welchem zumindest teilweise die übrigen Anordnungen des Mähdreschers ungünstig arbeiten, d. h., in einem nicht optimalen Bereich liegen. So ist es erfindungsgemäß vorgesehen, daß die Veränderung derart durchgeführt wird, daß eine von der erzeugten Größe abhängige Größe (Fördermenge V) auf einen weitestgehend konstanten Wert geregelt wird. Dies ist in Figur 2 in einem Kennlinienbereich C gezeigt, wobei durch Veränderung der Drehzahl des Gebläses 12 (angedeutet durch die Drehzahlschar N oberhalb des Kennlinienbereiches C, wobei die Kennlinienschar N nicht größen- und maßstabsgerecht eingezeichnet ist) verändert wird. So wird erreicht, daß durch eine, insbesondere automatische, Erhöhung des Förderdruckes P die Fördermenge V bei steigender Siebbelastung weitestgehend konstant gehalten, d. h. auf einen weitestgehend konstanten Wert geregelt wird. Der weitestgehend konstante Wert kann auch in einem gewissen zulässigen Differenzbereich PD schwanken. Durch diese Regelung kann das Förderdruck-Fördermengen-Verhältnis optimal dem Bedarf der Mähdrescherbelastung an der Siebanordnung angepaßt werden. Dabei ist es, wie mit der Kennlinienschar N angedeutet ist, denkbar, in einem Regelbereich RB die Drehzahl des Gebläses 12 entlang einer einzigen Drehzahl-Kennlinie stetig zu erhöhen (bzw. zu senken), um zu dem Kennlinienbereich C zu gelangen oder aber für den Fall, daß der Förderdruck P bzw. die Fördermenge V zu stark oder abrupt abnimmt, die Drehzahl des Gebläses stufenweise zu erhöhen bzw. abzusenken und dann nach Erhöhung bzw. Absenkung auf einer höheren oder niedrigeren Kennlinie zu verändern.

Darüber hinaus ist es vorgesehen, daß die abhängige Größe auf einen weitestgehend optimalen, vorgebbaren Wert geregelt wird. Unter optimalem Wert ist einerseits zu verstehen, daß bei größtmöglichem Förderdruck P die größtmögliche Fördermenge V bei optimaler Drehzahl des Gebläses erreicht wird. Darüber hinaus ist aber auch unter optimalem Wert zu verstehen, daß die Kennlinie durch Veränderung der Drehzahl des Gebläses derart verändert wird, daß mit Verringerung der Fördermenge V der Förderdruck P ansteigt, wie dies im gestrichelten Teilbereich D der Kennlinie des Gebläses 12 in Figur gezeigt ist.

Das bedeutet also, daß der von dem Gebläse 12 erzeugte Druck mittels des Sensors 40 im Bereich der Siebanordnung 2 erfaßt wird, wobei im Falle einer Abnahme des erfaßten Druckes durch erhöhte Siebbelastung die Drehzahl des Gebläses 12 derart gesteigert wird, bis ein vorgebbarer, insbesondere optimaler Wert für den Druck am Sensor 40 erreicht ist. Umgekehrt funktioniert das erfindungsgemäße Verfahren derart, wenn an dem Sensor ein über einen optimalen Wert liegender Wert festgestellt wird, die Drehzahl des Gebläses 12 verringert wird, und zwar so lange, bis wieder der optimale Wert von dem Sensor 40 gemessen wird.

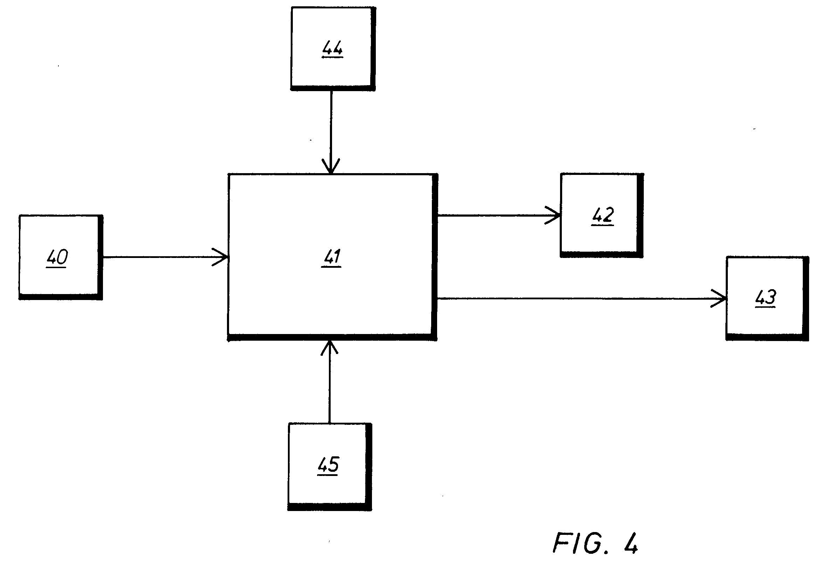

Figur 4 zeigt eine Steuereinrichtung zur Durchführung des erfindungsgemäßen Verfahrens, wobei mit der Steuereinrichtung gemäß Figur 4 eine vollautomatische Regelung des Förderdruckes realisiert ist. Mit dem Sensor 40, wobei es zusätzlich denkbar ist, mehrere Sensoren in der Siebanordnung oder im Bereich der Siebanordnung anzuordnen und ein Summensignal zu bilden, wird der Förderdruck P gemessen und ein Ausgangssignal an eine Steuereinrichtung 41 abgegeben. In dieser Steuereinrichtung 41 wird der erfaßte Förderdruck anhand einer oder mehrerer in der Steuereinrichtung 41 abgespeicherten Kennlinien für Gebläse, insbesondere für den im speziellen Fall eingesetzten Gebläsetyp, verglichen und eine Abweichung von dem weitestgehend konstant bzw. weitestgehend optimal einzuregelnden Wert über ein Anzeigeeinrichtung 42 angezeigt. In Abhängigkeit der Anzeige der Anzeigeeinrichtung 42 ist es nun einer Bedienperson des Mähdreschers möglich, beispielsweise durch Einflußnahme auf den Keilriemenvariator die Drehzahl des Gebläses zu verändern. Dabei erfolgt die Veränderung so lange und in eine solche Richtung (Erhöhung bzw. Verringerung der Drehzahl), bis keine Abweichung mehr oder nur noch eine geringfügige Abweichung vorhanden und angezeigt ist. Bei einer vollautomatischen Regelung weist die-Steuereinrichtung 41 eine Einrichtung 43 zur Veränderung allgemein des Parameters des Gebläses 12 (insbesondere eine Einrichtung zur Veränderung der Drehzahl), auf. Dabei ist es denkbar, bei der vollautomatischen Regelung sowohl die Anzeigeeinrichtung 42 zur Information der Bedienperson und die Einrichtung 43 vorzusehen, wobei die vollständige Regelung auch ohne die Anzeigeeinrichtung 42 funktioniert.

Weiterhin ist erfindungsgemäß vorgesehen, daß die Regelung in Abhängigkeit der Art des Erntegutes durchgeführt wird. Zu diesem Zweck weist die Steuereinrichtung 41 eine Eingabeeinrichtung 44 auf oder ist mit der Eingabeeinrichtung 44 verbunden. Damit ist es denkbar, die Sollwerte für den optimalen Förderdruck bzw. die in der Steuereinrichtung 41 abgelegten Kennlinien eines bestimmten Gebläsetyps oder bestimmter Siebanordnungen (zum Beispiel Maschenweite der Siebe) in Abhängigkeit von der Art des Erntegutes zu ändern. Dabei ist es denkbar, daß diese Änderung (Modifikation) linear über den gesamten Druckbereich der Fördermenge oder auf andere Art und Weise (beispielsweise durch Stützpunkte) erfolgt. Ergänzend ist in Figur 4 noch eine Einrichtung 45 gezeigt, bei es sich beispielsweise um eine Erfassungseinrichtung für weitere Größen (wie beispielsweise Fahrgeschwindigkeit des Mähdreschers oder Feuchtigkeit des Erntegutes) erfaßt werden, wobei diese oder die erfaßten Größen mit in die Regelung einfließen können.

Als weitere Größen, die mit der Einrichtung 45 (Sensor bzw. Sensoren) erfaßt werden können, handelt es sich um Betriebsgrößen des Mähdreschers wie z. B. Hangneigung (d. h. die Neigung des Mähdreschers in Längsachse bzw. Querachse, die bei Bergauffahrt, Bergabwärtsfahrt sowie seitlicher Hangfahrt links und rechts geneigt auftritt). Dabei fließen diese erfaßten Größen ganz oder zumindest teilweise bei der Regelung der abhängigen Größe auf den weitestgehend konstanten Wert ein.

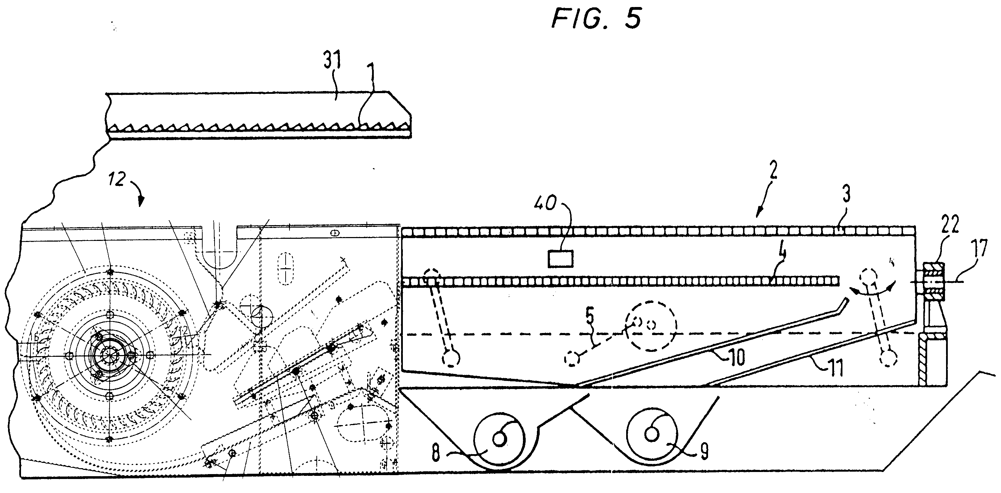

In Fig. 5 ist noch ergänzend gezeigt, daß das Gebläse 12 als Querstromgebläse ausgebildet ist.

## Patentansprüche

1. Verfahren zum Betreiben eines Mähdreschers mit einer Schneid- und Zufuhranordnung für das Erntegut, mit einer Dreschanordnung mit Kornabscheidevorrichtung, mit einer insbesondere in Längsrichtung des Mähdreschers liegenden Siebanordnung und mit einer Gebläseanordnung, die in Fahrtrichtung des Mähdreschers gesehen vor bzw. unter der Siebanordnung vorgesehen ist, wobei ein Parameter der Gebläseanordnung veränderbar ist,
*dadurch gekennzeichnet,* daß der Parameter des Gebläses, insbesondere die Drehzahl, in Abhängigkeit von einer von dem Gebläse erzeugten Größe (wie z. B. Windgeschwindigkeit oder Druck) verändert wird.

2. Verfahren nach Anspruch 1,
*dadurch gekennzeichnet,* daß die Veränderung derart durchgeführt wird, daß eine von der erzeugten Größe abhängige Größe (Fördermenge) auf einen weitestgehend konstanten Wert geregelt wird.

3. Verfahren nach Anspruch 2,
*dadurch gekennzeichnet,* daß die abhängige Größe auf einen weitestgehend optimalen, vorgebbaren Wert geregelt wird.

4. Verfahren nach einem der vorhergehenden Ansprüche,
*dadurch gekennzeichnet,* daß die Regelung in Abhängigkeit der Art des Erntegutes durchgeführt wird.

5. Verfahren nach einem der vorhergehenden Ansprüche,
*dadurch gekennzeichnet,* daß eine Abweichung von dem weitestgehend konstant bzw. weitestgehend optimal einzuregelnden Wert angezeigt und eine Veränderung der Drehzahl des Gebläses von einer Bedienperson des Mähdreschers durchgeführt wird.

6. Verfahren nach einem der vorhergehenden Ansprüche,
*dadurch gekennzeichnet,* daß eine Abweichung von dem weitestgehend konstant bzw. weitestgehend optimal einzuregelnden Wert erfaßt und eine Veränderung der Drehzahl des Gebläses derart bzw. so lange durchgeführt wird, bis die Abweichung einen vorgebbaren Wert unterschreitet.

7. Mähdrescher mit einer Schneid- und Zufuhranordnung für das Erntegut, mit einer Dreschanordnung mit Kornabscheidevorrichtung, mit einer insbesondere in Längsrichtung des Mähdreschers liegenden Siebanordnung und mit einer Gebläseanordnung, die in Fahrtrichtung des Mähdreschers gesehen vor bzw. unter der Siebanordnung vorgesehen ist, wobei ein Parameter der Gebläseanordnung veränderbar ist,
*dadurch gekennzeichnet,* daß in einem Bereich, der von einer von dem Gebläse erzeugten Größe beaufschlagt ist, zumindest ein Sensor angeordnet ist, wobei der Sensor mit einer Steuereinrichtung verbunden ist, die in Abhängigkeit eines Signales des Sensors den Parameter des Gebläses verändert.

8. Mähdrescher nach Anspruch 7,
*dadurch gekennzeichnet,* daß die Steuereinrichtung eine Eingabeeinrichtung aufweist und/oder mit einer Eingabeeinrichtung verbunden ist sowie eine Einrichtung aufweist und/oder mit einer Einrichtung verbunden ist zur Veränderung des Parameters.

9. Mähdrescher nach einem der vorhergehenden Ansprüche,
*dadurch gekennzeichnet,* daß der Mähdrescher, insbesondere die Steuereinrichtung, eine Anzeigeeinrichtung für die von dem Gebläse erzeugten Größe aufweist.

10. Mähdrescher nach einem der vorhergehenden Ansprüche,
*dadurch gekennzeichnet,* daß der Sensor in einem Bereich hinter einem Luftaustritt des Gebläses angeordnet ist.

11. Mähdrescher nach einem der vorhergehenden Ansprüche,
*dadurch gekennzeichnet,* daß der Sensor im Bereich der Siebanordnung, insbesondere zwischen dem Ober- und dem Untersieb, angeordnet ist.

12. Mähdrescher nach einem der vorhergehenden Ansprüche,
*dadurch gekennzeichnet,* daß der Sensor in der Siebanordnung integriert ist.

13. Mähdrescher nach einem der vorhergehenden Ansprüche,
*dadurch gekennzeichnet,* daß die Steuereinrichtung eine Einrichtung aufweist, mit der weitere Größen (wie beispielsweise Einsatzgrößen des Mähdreschers) erfaßt werden.
